# EUROPEAN PATENT SPECIFICATION

(11) **EP 3 235 662 B1**
(45) Date of publication and mention of the grant of the patent: **08.04.2020**
(21) Application number: 17157317.3
(22) Date of filing: 17.02.2016
(51) Int. Cl.: B60C 11/00

(54) **TIRE TREAD AND PNEUMATIC TIRE**
REIFENLAUFFLÄCHE UND LUFTREIFEN
BANDE DE ROULEMENT ET PNEUMATIQUE

(43) Date of publication of application: 25.10.2017
(62) Divisional of application: 16156126.1
(73) Proprietor: Nexen Tire Corporation, Gyeongsangnam-Do (KR)
(72) Inventor: Schlüfter, Matthias, 65439 Flörsheim am Main (DE); Steiner, Uwe, 63796 Kahl am Main (DE); Hoelzel, Michael, 64572 Büttelborn (DE); Knipsel, Oliver, 63571 Gelnhausen (DE)
(74) Representative: Tergau & Walkenhorst Patentanwälte PartGmbB

(56) References cited:
- EP-A1- 1 512 554
- EP-A2- 0 106 838
- JP-A- 2000 118 212
- US-A1- 2007 187 013

## Description

### Field of the invention

The invention relates to a tire tread. It also relates to a pneumatic tire comprising such a tire tread.

### Background of the invention

As a tire wears, the volume of the tread decreases due to frictional contact with the road surface and the volume of the grooves of the tread decreases. When the groove volume decreases, the tire's ability to channel water away from the tire footprint is reduced; this in consequence reduces the wet road tire performance. It is therefore desirable to have a tire which shows only little wear.

Another demand on modern tires is a high grip to the road. A tire tread with a high grip level reduces its lifetime due to larger wear and tear. In other words, the disadvantage of high grip tires is the increased wear. If the grip level is increased, the wear also increases. Accordingly, there is a conflict between the two demands of high grip level and high wear resistance. With respect to the design of the compound, by enabling a good wet grip, the compound is built of materials which are strongly subject to wear.

The EP 2 695 749 B1 discloses a tire tread made from multi cap compounds, whereby an inner layer in certain regions of the tread reaches radially outwardly into an outer layer.

The US 2007/187013 A1 discloses a tire tread, according to the preamble of claim 1, with an outer layer and a radially inner layer, whereby the inner layer reaches to the surface of the tire tread in inner regions of a plurality of grooves.

The JP 2000 118212 A discloses a tire tread with a belt structure and base/cap rubber layers and a through-part which from the belt structure extends to the surface of the tire tread in a plurality of ribs.

An aim of the current invention is to provide a tire tread with a high grip level and simultaneously a strong wear resistance.

A further aim is to provide a pneumatic tire with such a tire tread.

### Summary of the invention

The invention relates to a tire tread in accordance with claim 1 and to a pneumatic tire in accordance with claim 9.

Dependent claims refer to preferred embodiments of the invention.

In a first aspect, the invention relates to a tire tread comprising shoulder blocks and comprising at least one groove and at least one rib providing an outer contact surface, further comprising a first radially outer layer made of an outer tread rubber compound, further comprising a radially inner layer made of an inner tread compound, wherein the inner layer reaches radially through the at least one outer layer to the contact surface at least in one outer contact region of the outer contact surface in an unworn state of the tire tread in such a way that the outer contact surface comprises at least one region of the outer layer and at least one region of the inner layer, whereby a second outer layer is provided which is arranged in the respective shoulder block and/or in the respective rib and which is made of a rubber compound which is different from the rubber compound of the first outer layer.

The invention is based on the consideration that modern demands on pneumatic tires for vehicles include at the same time both strong grip, thereby increasing traction and therefore safety and high wear resistance, which results in a prolonged lifetime of the tire tread and of the whole tire. Since both requirements demand different kinds of optimized compound materials, there is usually a tradeoff in the tread design that has to be made.

Applicant has found that these demands can simultaneously be met by providing a tire tread with an outer layer and another layer which is radially located essentially below the outer layer, but reaches to the surface where the tire gets in contact with the road in at least one region of the tread already in an unworn state of the tire. Therefore, the road simultaneously is in contact with tread regions which are composed of these two or more compounds. The location of the regions in which the more inner layer is reaching the surface can in material, size and shape be designed to yield an optimized performance with respect to wear and lifetime.

"Groove" denotes an elongated void area in a tread which may extend at least partially circumferentially or laterally about the tread in a straight, curved, or zigzag manner. Circumferentially and laterally extending grooves sometimes have common portions and maybe be classified as "wide" or "narrow". A "narrow groove" has preferably a width greater than a snipe but less than or equal to about 4.0 mm. A "wide groove" has preferably a width greater than about 4.0 mm.

"Block" means an at least partially circumferentially extending strip of rubber of the tread which is defined by at least one circumferential groove and either a second circumferential groove or a lateral edge, wherein the strip is not divided by full depth grooves. A block can comprise a rib or a shoulder block of the tire tread. A block is arranged at least at one side adjacent to a groove.

"Radial" and "radially" are used to indicate directions radially toward or away from the symmetry axis of the tread, which corresponds to the rotation axis of a mounted tire with such a tread.

"Radially inner" layer means that when looking in a radial direction from the symmetry axis of the tread, this layer is more close to the axis than a "radially outer layer". Symmetry axis means that the overall tire tread is essentially rotationally symmetric around this axis while the detailed structure of ribs and blocks needs not be symmetric with respect to this axis.

"Contact surface" means the surface with which the tire tread under normal conditions gets into contact with the road. It is therefore at least locally a radially outermost part of the tread.

The term "reaching through" of a first layer through a second layer means that the first layer radially locally extends further than the second layer and extends up to the surface of the tread. The term "reaching outwards into" of a first layer into a second layer means that locally the first layer extends radially further than the second layer, without necessarily reaching the tread surface.

The expression that the inner layer reaches through the outer layer or layers includes the case where on two sides of the through-reaching region of the inner layer, the outer layer is arranged, i.e. the inner layer is surrounded on two sides by the outer layer. It also includes preferably the case where the inner layer is adjacent to the outer layer or layers only on one side.

Advantageously, the at least one contact region is located at a region of the outer contact surface which during use of the tire tread in a pneumatic tire for a vehicle is especially subjected to wear. Typically, a tire tread has strongest wear on the edges of the ribs or blocks. Because of the strain it undergoes, advantageously the edge regions or outer regions of the respective ribs should be made of the compound of the radially more inner layer of which the compound can be optimized for high wear and strain resistance. The contact surface therefore at the edges of the respective rib or at least at one edge of the respective rib is made of this compound.

The tire tread preferably comprises at least two contact regions which are symmetrically arranged with respect to a symmetry plane which is perpendicular to the symmetry axis of the tire tread.

Preferably, the inner layer locally radially outwards narrows towards the at least one outer contact region. In this way, the contact area between the outermost layer or layers and the inner layer is enlarged compared to the case where the inner layer would exactly radially go outward. The enlarged interface area between these two regions increases the attachment of these two or three layers and therefore the stability of the tread. As a consequence, when the tire wears and the surface thickness at the contact region is reduced, the area of the contact region grows, and the grip contact area gets smaller. This effect, however, is countered by the fact that due to the wear of the respective block, its height or radial extension is reduced which renders the block stiffer and thereby reduces its susceptibility for wear.

Advantageously, the inner layer, when locally narrowing towards the outer contact region respectively forms an essentially trapezoidal shape. The trapezoidal shape comprises two tiled interface areas of the inner layer with the outer layer, enforcing and supporting their cohesion.

In a preferred embodiment, the tire tread comprises a plurality of ribs, whereby each rib comprises two inner zones in which the inner layer radially reaches outwards into the outer layer or outer layers.

In one preferred variant, in each rib exactly one of the two inner zones reaches radially to the outer contact surface, providing an outer contact region. This design is especially advantageous for non-symmetric tire treads, whereby non-symmetric denotes the cross section of the tread.

In an alternative preferred variant, in each rib, both inner zones reach radially to the outer contact surface, providing an outer contact region. This tread design can be advantageous for symmetrical treads.

Between two adjacent ribs and/or between a rib and an adjacent shoulder block of the tread, preferably a groove is formed.

The respective groove preferably has a trapezoidal shape or V-shape. A V-shape groove is especially easy to create in the tread during its manufacturing, while a trapezoidal shape is more difficult to cut out of the respective rubber compounds. For rather small tire treads, trapezoidal or other more complex shapes are very difficult or impossible to achieve. The shape of the respective groove is in its shape, its size and its radial and circumferential extension as well as its direction in the tread adopted to serve the desired tire tread properties.

The tread can comprise one or more outer layers. Each of the outer layers is built of an outer tread compound. In one preferred embodiment, the tread comprises exactly one outer layer, of which the compound and its design are preferably optimized for grip. In a second preferred embodiment, two outer layers are provided, whereby each outer layer is built of a different compound.

The outer tread compound is preferably a rubber compound. In case that more than outer layer is provided, each of the outer layers preferably comprises a different tread compound. The inner tread compound is preferably a rubber compound.

According to the invention the outer tread compound has Shore A between 55 and 75 degrees and/or has rebound at 23° C between 15 and 30 % and/or has rebound at 100° C between 45 and 65 % and/or has module 300% between 8 and 14 Mpa and or has tan delta at 60° C between 0.080 and 0.155.

Preferably the inner tread compound has Shore A between 55 and 75 degrees and/or has rebound at 23° between 30 and 45 % and/or has rebound at 100° between 50 and 75 % and/or has module 300% between 8 and15 MPa and or has tan delta 60° C between 0.060 and 0.140.

Preferably, the tire tread comprises a third layer made of a third compound, whereby the third layer is the inner most layer. The third layer or base layer is made of a compound which is quite stiff and therefore provides stiffness or rigidity for the tire tread,

The third layer compound is preferably made of a rubber compound.

Preferably, the third tread compound has Shore A between 55 and 75 degrees and/or has rebound at 23° C between 15 and 30 % and/or has rebound at 100° C between 40 and 60 % and/or has module 300% between 8 and 12 MPa and or has tan delta 60° C between 0.040 and 0.100.

Preferably, the tire tread comprises at least one outer edge part or wing or tread edge made of an edge tread component. This outer edge part or layer can support the attachment of tread and sidewall of the tire. The edge tread compound is preferably a rubber compound which is suited for a sidewall of a tire.

In a second aspect, the invention relates to a pneumatic tire comprising a tire tread as described above.

Preferably, the pneumatic tire comprises a tire tread as described above, whereby the tire comprises two sidewalls arranged, respectively, adjacent to the tire tread, and whereby the edge tread compound is essentially identical to the compound of which the respective sidewall is made. In other words, the respective edge part and the sidewalls are preferably made of the same rubber compound. In this way, the edge part serves especially well to support the attachment or connection between tire tread and respective side wall of the tire.

The advantages of the invention are especially as follows. The integration of two or three different layers in a tire tread, of which one or two are optimized for high grip and the other one is optimized for high wear resistance, wherein the layers build parts of the contact surface of the tire tread to the road, results in a tire tread which fulfills simultaneously the demands on high grip and a long lifetime and is therefore especially suited for modern vehicles. It fulfills modern demands on safety and lifetime.

### Brief description of the drawings

Further features and advantages of the present invention shall become clearer from the following detailed description of some of its preferred embodiments, made with reference to the attached schematic drawings and given as an indication and not for limiting purposes.

In particular, the attached drawings are included to provide a further understanding of the invention and are incorporated in and constitute a part of this specification.

The drawings together with the description explain the principles of the invention. In the drawings, corresponding characteristics and/or components are identified by the same reference numbers. In these drawings:
- FIG. 1: shows a cross-sectional view of a tire tread for a pneumatic tire;
- FIG 2: shows a cross-sectional view of a tire tread for a pneumatic tire;
- FIG 3: shows a cross-sectional view of a tire tread for a pneumatic tiret;
- FIG. 4: shows a cross-sectional view of a tire tread for a pneumatic tire;
- FIG. 5: shows a cross-sectional view of a tire tread for a pneumatic tire;
- FIG. 6: shows a cross-sectional view of a tire tread for a pneumatic tire;
- FIG. 7: shows a cross-sectional view of a tire tread for a pneumatic tire;
- FIG. 8: shows a cross-sectional view of a tire tread for a pneumatic tire in a preferred embodiment of the invention with two different outer compounds;
- FIG. 9: shows an illustration of areas of a tire tread subject to wear; and
- FIG. 10: shows an illustration of a tire tread with irregular wear after heavy handling.

### Detailed description of the invention

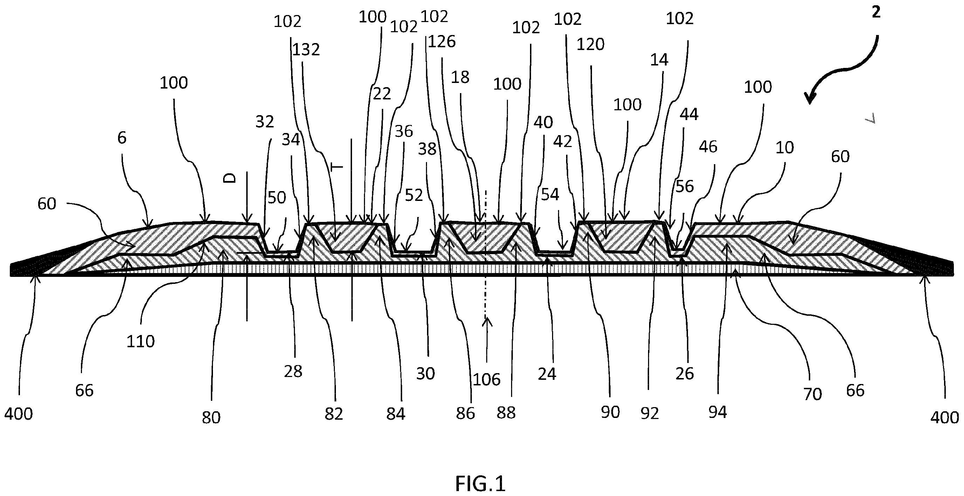

A cross-sectional view of a tire tread 2 for a pneumatic tire is shown in FIG. 1. The corresponding pneumatic tire may be formed of typical tire components known to those skilled in the art, such as, but not limited to, inner liner (not shown), annular beads (not shown), sidewall (not shown), apex (not shown), plies (not shown), possible edge compound (not shown) and belt package (not shown). The tire tread comprises a first shoulder block 6 and a second shoulder block 10. The shoulder blocks 6, 10 form the respective shoulder region of the tire. The tire tread 2 comprises three ribs 14, 18, 22. The tire tread 2 comprises in other embodiments two ribs, four ribs or more ribs.

The tire tread 2 can instead of ribs 14, 18, 22 alternatively comprise tread blocks, preferably circumferentially aligned tread blocks. Ribs 14, 22 are separated from shoulder blocks 6, 10 by grooves 26, 28, respectively. Ribs 14, 18 are separated from each other by a groove 24. Ribs 18, 22 are separated from each other by a groove 30. The grooves 24, 26, 28, 30 respectively have a defined depth D and preferably comprise inclined pairs of sidewalls 32, 34; 36, 38; 40, 42; 44, 46. The grooves 24, 26, 28, 30, respectively, comprise a flat bottom part 50, 52, 54, 56.

The tire tread 2 comprises an outer layer 60, whereby this outer tread layer 6 is made of a first or outer rubber compound. The rubber compound material is optimized to provide a layer with a high grip to the road.

The tire tread 2 further comprises a radially inner layer 66 which is made of a second or inner rubber compound. This compound is optimized to provide a layer which is robust against wear and therefore comprises a high abrasion resistance.

The tire tread 2 moreover comprises a third layer or base layer 70 which is the radially innermost layer of the tire tread. Base layer 70 is made of a third or base rubber compound.

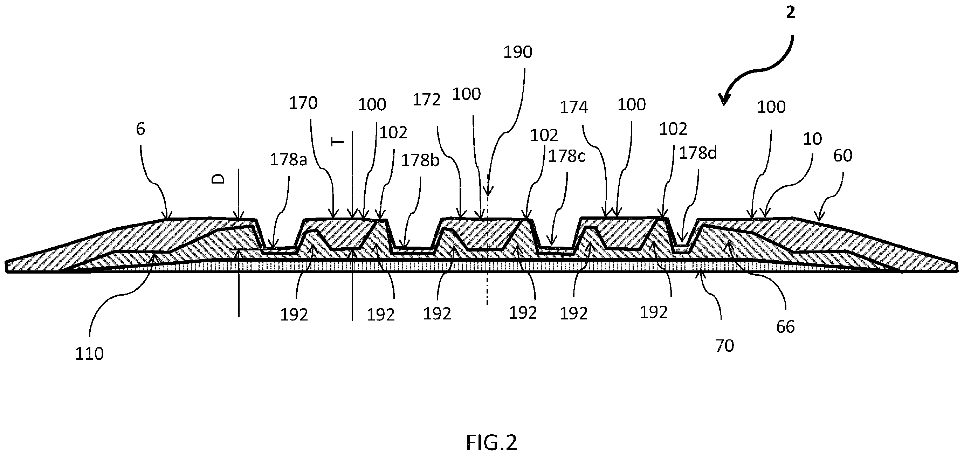

The following table shows preferred values of physical quantities characterizing, respectively, the compound materials of outer layer 60, inner layer 66, and base layer 70. These preferred values listed in the table are preferred values for the preferred embodiment shown in FIG. 1 as well as the preferred embodiments shown in FIGs. 2 to 8.

| | outer layer | inner layer | base layer |
|---|---|---|---|
| Shore A [degrees] | 55-75 | 55-75 | 55-75 |
| Rebound 23°[%] | 15-30 | 30-45 | 15-30 |
| Rebound 100° [%] | 45-65 | 50-75 | 40-60 |
| Module 300° [MPa] | 8-14 | 8-15 | 8-12 |
| tan delta 60° | 0.080-0.155 | 0.060-0.140 | 0.040-0.100 |

The tire tread 2 is optimized to provide simultaneously a high grip and wear and strain-resistance. This is especially achieved by the design, spatial arrangement of the layers 60, 66 and the choice of the compound materials of layers 60, 66.

The base layer 70 is the radially innermost layer and has a profile with essentially a constant depth in a central region of tire tread 2 which is reducing its depth in the shoulder or wing regions of tire tread 2. Its main function is to provide a desired stiffness or rigidity to the tire tread 2.

The second layer or inner layer 66 is radially more outward than the base layer 70. The profile of the inner layer 66 comprises several blocks 80, 82, 84, 86, 88, 90, 92, 94 which, respectively, reach radially outwards into the outer layer 60. Blocks 80-94 respectively comprise essentially a trapezoidal shape with two parallel sides of which the smaller one is radially more outwards than the larger side, whereby the larger side - as a virtual line - lies within the layer 66. In the preferred embodiment shown, for each block 82, 84, 86, 88, 90, 92, the respective smaller side of the trapezoidal block is reaching to the outer surface 100 of the tire tread 2, providing a respective outer contact region 102. This means especially that locally, the inner layer 66 extends radially more outwards than the outer layer 60. The block 80 lies in the left shoulder block 6 and does not reach to the surface 100. The block 94 lies in the right shoulder block 10 and does not reach to the surface 100.

The outer surface 100 of tire tread 2 is therefore build of outer contact regions 102 of layer 66 and of other regions of layer 60. Therefore, the layers 60, 66 simultaneously provide contact to the road at different regions of the surface or contact surface 100 of tire tread 2. The configuration shown in FIG. 1 corresponds to the unworn state of tire tread 2. The layer 66 is optimized to counter wear. As can be inferred from FIG. 1, when the tire wears and the tire tread 2 is reduced in its thickness, the contact regions 102 of layer 66 at the surface 100 become larger compared to their size in an unworn state. The more the tire tread 2 gets worn, the more upcoming wear is prevented by the outer contact regions 102 of layer 66. The decreasing of the surface region of the outer layer 60 is countered somewhat by the increasing stiffness of the respective rib 14, 18, 22 which, as the tread wears, is reduced in its radial extension or height.

Outer layer 60 and inner layer 66 are separated by a dividing contour or interface line 110 which separates layer 60 radially from layer 66. While inner layer 66 is radially inside contour 110, outer layers 60 is radially outside contour 110. At the contact regions 102, the contour 110 reaches the surface 100 of the tire tread 2, since also layer 66 reaches the surface 100 and hence in these regions there is no outer layer 60.

In ribs 14, 18, 22, between the blocks 82-92 which belong to inner layer 66 and which are built of the inner rubber compound, zones 120, 126, 132 are formed which are filled with the outer compound of layer 60. Zones 120, 126, 132 are essentially V-shaped, with an even bottom part. They are on each side adjacent to layer 66. The depth T of these zones is preferably between 30% and 120%, most preferably between 50% and 75%, of the depth D of the grooves. Preferably at least two zones are provided, with at least one zone on each side of tire tread 2. Additionally, in the shoulder parts or shoulder blocks 6, 10 of tire tread 2, zones made of the outer compound can be provided. The respective width of these zones is preferably designed according to the application and demands on the tire. There are preferably between 30% and 95% of the width of the blocks, most preferably more than 80%.

The tire tread profile is not symmetric but slightly asymmetric with respect to a plane 106 which is perpendicular to the rotation axis of the corresponding tire and also perpendicular to a symmetry axis of tire tread 2 and is located at half of the width of the entire tire tread profile. Especially groove 26 has a smaller width than grooves 24, 28, 30. The invention is not limited to blocks 82-92 with trapezoidal shape as shown in FIG. 1. Other possible variants are half round, V-shapes, square with the possibility of round edges on the bottom. The invention also comprises tire treads 2 which are symmetric with respect to a plane.

Tire tread 2 can comprises optional edge parts 400 which are preferably made of a rubber compound which is suitable for the sidewall of a pneumatic tire. Most preferably, the rubber compound of sidewall and of the respective edge part is essentially identical. This design fosters the attachment of tire tread 2 and respective sidewall of the tire.

A second embodiment of a tire tread 2 is shown in FIG. 2. Also this embodiment comprises an innermost base layer 70, an inner layer 66 and an outer layer 60. Tire tread 2 comprises two shoulder blocks 6, 10. Tire tread 2 comprises three ribs 170, 172, 174, which are separated from each other or from shoulder blocks 6, 10 by grooves 178a, 178b, 178c, and 178d. In each rib 170, 172, 174, there are two protrusions or zones 192 or blocks of layer 66 reaching radially outwards into layer 60. Between these protrusions or zones 192, zones of layer 60 are formed. In each rib 170, 172, 174, exactly one protrusion reaches to the surface 100 providing a respective outer contact region 102, while the other protrusion stays radially within layer 60. Hence, in each rib 170, 172, 174, exactly one outer contact region 102 is built or formed.

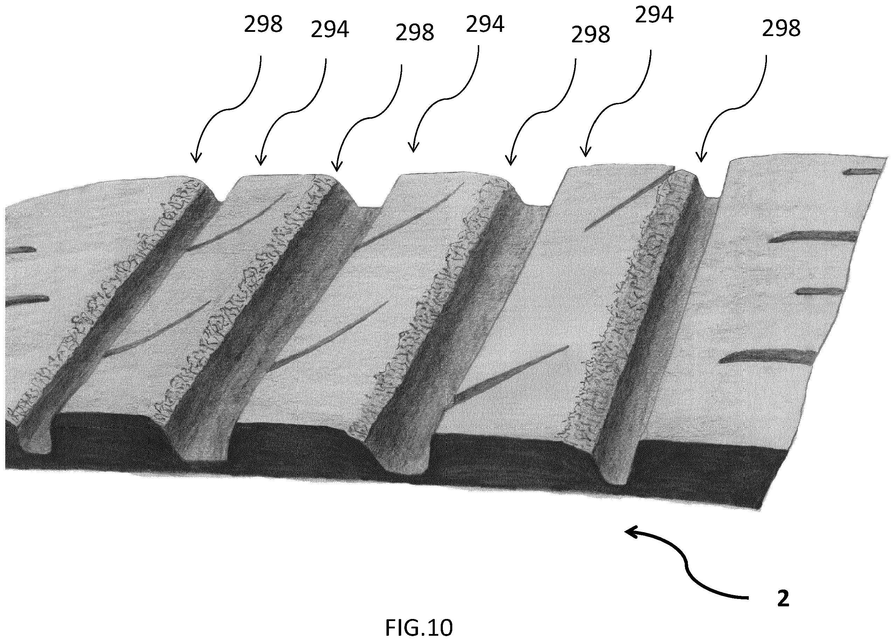

Tire tread 2 is not symmetrical with respect to a plane 190. This design is especially advantageous for asymmetric tire profile design, whereby the outer side of the tire is more strained than the inner side of the tire. To this end, in each rib 170, 172, 174, the more right or outer zone 192 is providing a contact region 2, which will be discussed in connection with FIG. 10. In FIG. 2, the outer side of tire tread 2 is on the right side. Groove 178d has a smaller overall width than grooves 178a, 178b, 178c, 178d.

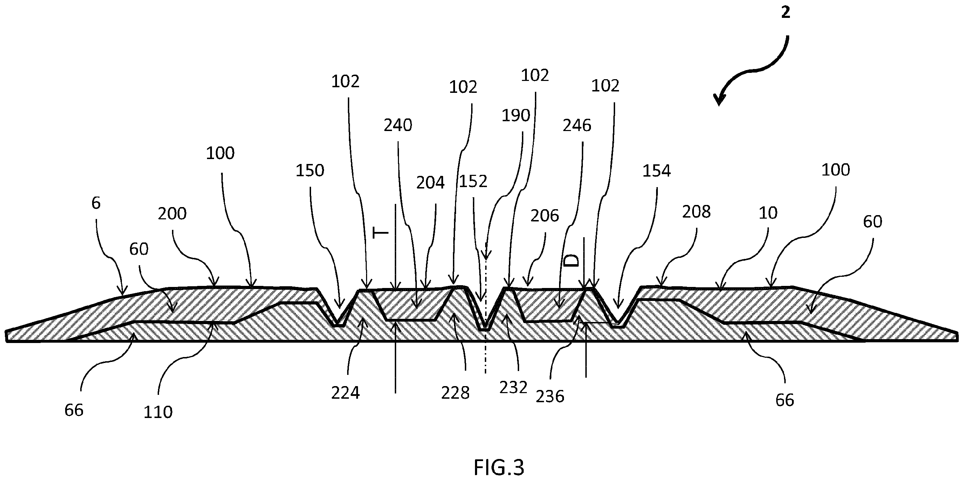

A third embodiment of a tire tread 2 is shown in FIG. 3. Tire tread 2 comprises an outer layer 60 and an inner layer 66 but no further base or third layer like the previous two embodiments shown in FIGs. 1 and 2. The tire tread 2 comprises shoulder blocks 6, 10 and two ribs 204, 206. The tire tread 2 comprises a plurality of recesses 150, 152, 154 or grooves which are shaped like the letter "V". In another preferred embodiment, recesses 150, 152, 154 can be shaped like the letters "U" or "W" The three recesses 150, 152, 154 or grooves are all differently shaped. They are formed between a shoulder part 200 of shoulder black 6 and a rib 204, between rib 204 and a rib 206, and between rib 206 and a shoulder part 208 of shoulder block 10. In each of the two ribs 204, 206, the layer 66 reaches to the contact surface 100 of tire tread 2 two times in blocks protrusions 224, 228, 232, 236, forming respectively an outer contact region 102. Zones 240, 246 of layer 60 are formed, respectively, between adjacent protrusions 224, 228 in rib 204 and between protrusions 232, 236 in rib 206.

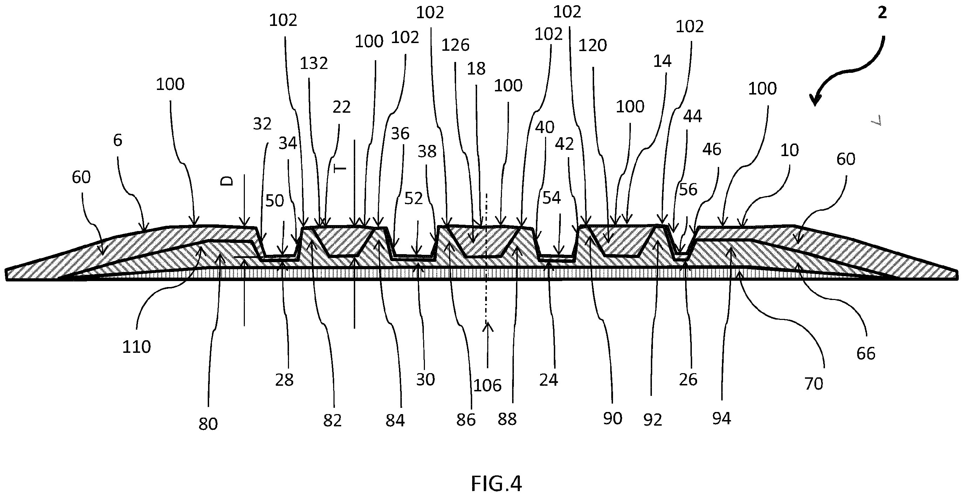

A fourth embodiment of a tire tread is displayed in FIG. 4. This tire tread 2 differs from the tire tread shown in FIG. 1 in the design of the shoulder blocks 6, 10. While the tire tread 2 of FIG. 1 in the shoulder blocks 6, 10 comprises an interface line 110 which towards the tire tread center comprises essentially two steps, the interface line 110 comprises only one step. It is rising and leveling off from the outside of the tread 2 towards to center of the tread 2, building only one step, while the interface line 110 of the tread 2 shown in FIG. 1 is rising and levelling off twice, leading to two steps. The design according to FIG. 4 is especially suited for sportive tires and for tires which are not directional tires.

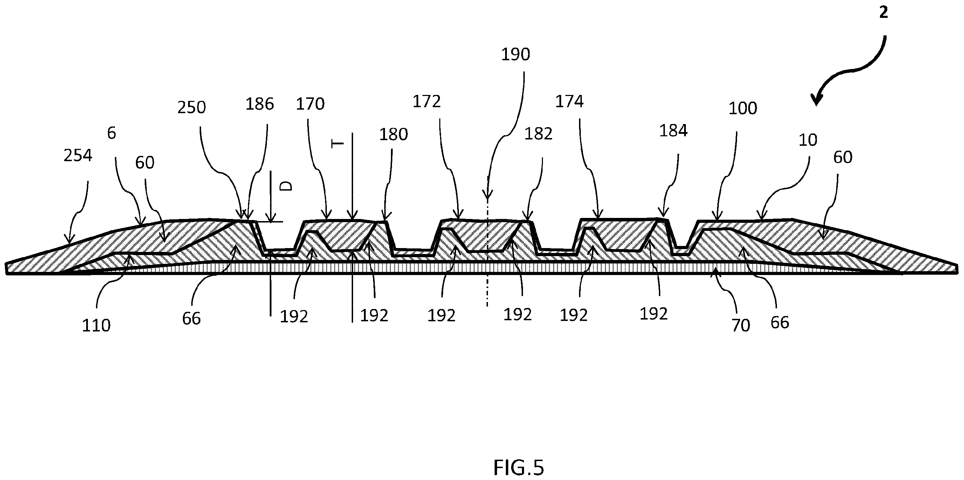

A tire tread 2 in a fifth embodiment is shown in FIG. 5. This tire tread 2 is asymmetric with respect to a plane 190. The right side in FIG. 5 is the outer side of tread 2 and the left side is the inner side of tread 2 when mounted on a vehicle. Tire tread 2 comprises two shoulder blocks 6, 10 and three ribs 170, 172, 174 between should blocks 6 and 10. Tire tread 2 comprises an outer layer 60, an inner layer 66 and a base layer 70, which throughout the tire tread 2 is the radially most inner layer. In each rib 170, 172, 174, two inner zones 192 or blocks of inner layer 66 are provided, whereby in each rib 170, 172, 174, exactly one of the two inner zones 192 builds an outer contact region 180, 182, 184 and reaches through outer layer 60 to the contact surface 100 of tread 2. The inner zone 192 which in each respective rib 170, 172, 174 reaches to the surface 100 is the more outer zone 192 in the tread. In tread 2, also in the inner shoulder block 6 the inner layer 66 reaches to the surface 100, building a contact region 186.

In the outer block 10, the inner layer 66 remains radially within layer 60. The contact region 186 is located at an inner region 250 of tread 2 which is closer to the plane 190 than an outer region 254. Inner region 250 and outer region 254 are referring to the tread 2. Both regions 250, 254 are part of the shoulder block 6. In a mounted state of tread 2 on a tire in a vehicle, regions 250, 254 are at the inner side of the tire. The design of the tread 2 is especially suited for asymmetric nondirectional tires. This design can maintain preserve the tire tread surface during heavy handling; see FIG.10 as an example of a normal tire after handling. Tire tread 2 can in other preferred embodiments comprise only one rib, two ribs or four or more ribs.

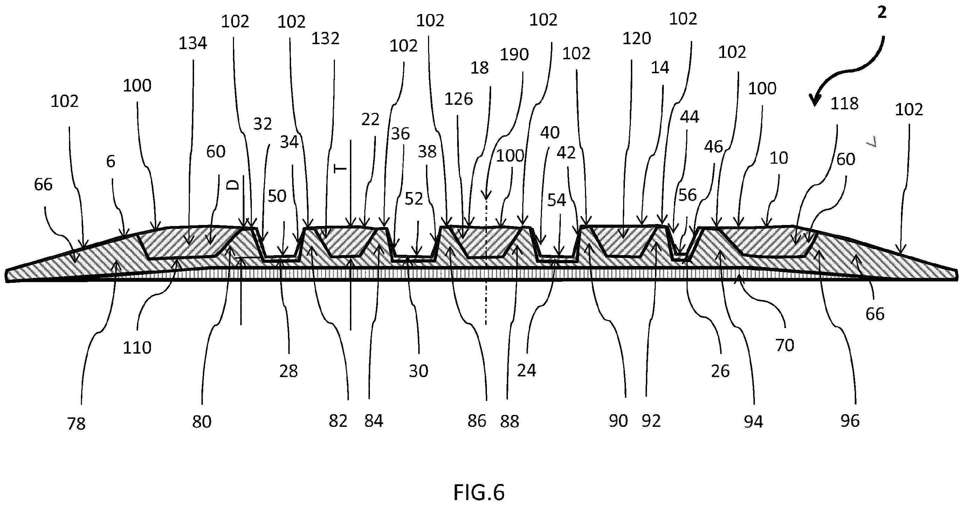

Still another embodiment of a tire tread 2 is shown in FIG. 6. The tread 2 is asymmetric with respect to a plane 190. Groove 26 has a smaller width than groove 28. Tire tread 2 has three ribs 14, 18, 22 and differs from tire tread 2 shown in FIG. 2 by the design of the shoulder blocks 6, 10. In shoulder block 6, the inner layer 66 reaches through the outer layer 60 in a zone 78 to the surface 100 of the tread 2, thereby forming an outer contact region 102. In this way, in shoulder block 6, a shoulder zone 134 of layer 60 is formed which on both sides is adjacent to layer 66.
In shoulder block 10, the inner layer 66 reaches through the surface in a zone 96 forming an outer contact region 102. In this way, in shoulder block 10, a shoulder zone 118 of layer 60 is formed which on both sides is adjacent to layer 66.

In one of these shoulder blocks 6, 10 or in both shoulder blocks 6, 10, the respective zone 78, 96 can reach to the edge of the tire tread 2. Alternatively, as described in connection with FIG. 1, at least one edge part can be provided.

This tread design is optimized for applications where the shoulder blocks 6, 10 of the tire tread 2 are especially subject to wear and therefore especially for tires for high loaded cars and commercial purposes. In a different preferred embodiment, only in one shoulder block 6, 10 is the inner layer 66 reaching to the surface 100, forming a contact region 102.

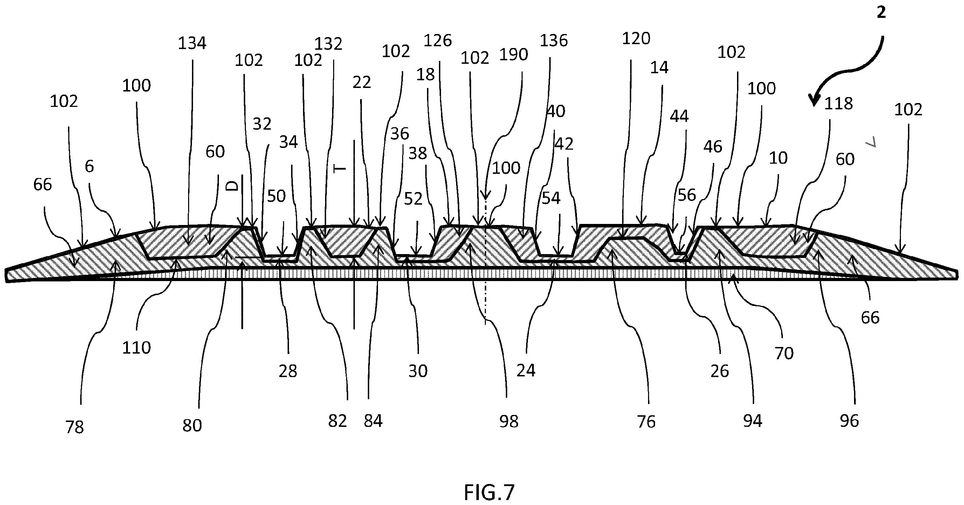

Another embodiment of a tread 2 is shown in FIG. 7. This tread 2 comprises three ribs 22, 18, 14 between shoulder blocks 6, 10. Tire tread 2 comprises an outer layer 60, an inner layer 66 and a base layer 70. In a centrally arranged rib 18, the inner layer 66 reaches through outer layer 60 centrally in rib18 forming an outer contact region 102 and has a zone 126 on its left side of outer layer 60 and another zone 136 on its right side of outer layer 60. This design is advantageous for applications where in the center of the tire tread 2 in the center of the rib 18 the distribution of bearing load or contact pressure per unit area is especially large. In other preferred embodiments, several ribs can be designed to have a central region of layer 66, or a rib with a centrally located region of layer 66 can be located adjacent to a shoulder block 6, 10.

In rib 22, the inner layer 66 in blocks 82, 84 builds two outer contact regions 102. In rib 14, the inner layer 66 does not reach to the surface 100 of the tread 2. In shoulder block 6, the inner layer 66 reaches through the outer layer 60 in a zone 78 to the surface 100 of the tread 2, thereby forming an outer contact region 102. In this way, in shoulder block 6, a shoulder zone 134 of layer 60 is formed which on both sides is adjacent to layer 66. In shoulder block 10, the inner layer 66 reaches through the surface in a zone 96 forming an outer contact region 102. In this way, in shoulder block 10, a shoulder zone 118 of layer 60 is formed which on both sides is adjacent to layer 66.

As way of example, a rib block with a centrally arranged inner layer 66 reaching to the surface can be arranged only in the middle or adjacent to a respective shoulder block; two blocks of this kind can be arranged, one in the middle and one adjacent to a shoulder block; two of these blocks can be arranged, adjacent respectively to shoulder blocks 6, 10, or all three blocks are designed in this way. In still other embodiments, tire tread 2 can comprise more than three ribs or blocks between shoulder blocks 6, 10 of which only one or all can be designed with a centrally located region of inner layer 66 reaching to the surface of the tread 2.

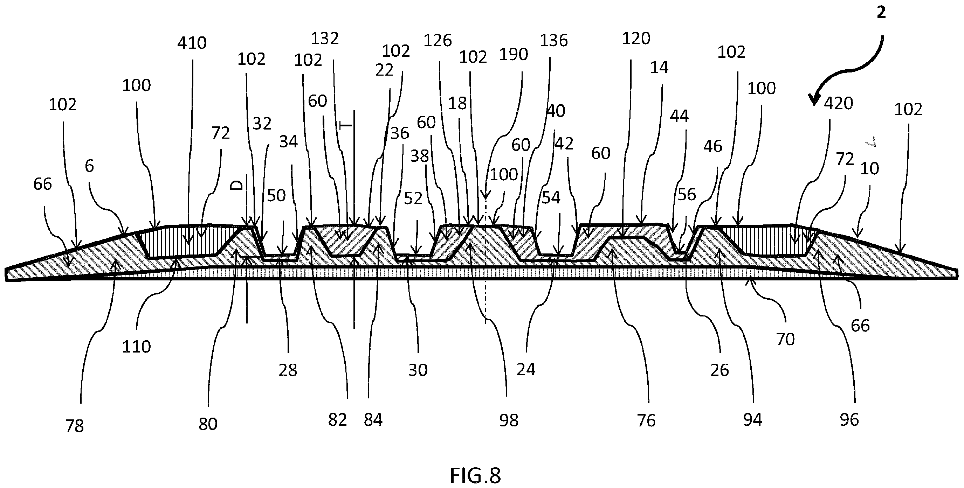

FIG. 8 shows a tread 2 in a preferred embodiment according to the invention. This tread 2 comprises three ribs 22, 18, 14 between shoulder blocks 6, 10. Tire tread 2 comprises an outer layer 60, an inner layer 66 and a base layer 70. The tread 2 is different from the tread 2 according to FIG. 7 in that besides the outer layer 60, a second outer layer 72 is provided. The outer layer 72 is built or arranged in the respective shoulder block 6, 10, respectively forming a shoulder zone 410, 420 which on each side is adjacent to layer 66. In other preferred embodiments, the second outer layer 72 can be formed in only one shoulder block 6, 10. The second outer layer 72 can alternatively or additionally be built in a rib 14, 18, 22. The tire tread 2 can have one or more ribs between shoulder blocks 6, 10. The outer layer 72 is made of a rubber compound which is different from the rubber compound of outer layer 60. The rubber compound of layer 72 is preferably optimized to provide strong wet grip and/or strong grip with reduced abrasion during handling. Alternatively, it can be optimized to provide even better wear and tear properties than the rubber compound of layer 60.

The tire treads 2 shown in FIGs. 1, 2, 4, 5, 6, 7, 8 in other preferred embodiments have no base layer 70. Wings 400 in the preferred embodiment of a tire tread according to FIG. 1 can in other preferred embodiments also be built in tire treads according to FIGs. 2, 3, 4, 5, 6, 7, 8.

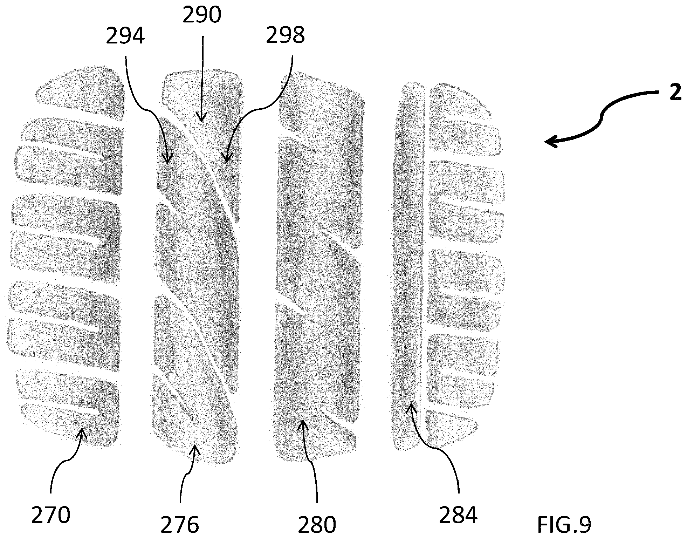

In FIG. 9, a section of an exemplary tire tread 2 is shown in a top view. Tread 2 has four ribs 270, 276, 280, 284 which are running around the tread 2. Each rib 270, 276, 280, 284 comprises several cuts or grooves. As is shown for rib 276 and also applies to the other ribs, each rib 270, 276, 280, 284 comprises a center section 290 and two adjacent border sections 294, 298 which comprise, respectively, an edge or border of the tire tread pattern. These edges are subject to a higher wear and tear than the part of the rib in between, which is indicated in the present FIG. by a darker color. The larger wear and tear results from the larger contact pressure per unit area. This increased tear and wear at the flanks of the respective tire tread 2 is according to the present invention countered by the inner layer 66 which especially in these regions reaches the surface already in the unworn state of the tire and therefore is in contact with the road.

FIG.10 shows an exemplary view of a cut section of a tire 2 after heavy handling. For the tire 2 shown, only one border section 298 is heavily worn, while the opposite border section 294 is not considerably worn. The side of the respective rib which is at the outer side when the tire is mounted on a vehicle is heavily worn. In the present example, the tire is mounted on the right side of the vehicle.

The invention thus conceived can be subjected to numerous modifications and variants all falling within the scope of the inventive concept. In addition, all details can be replaced by other technically equivalent elements. In practice, all the materials used, as well as the shapes and contingent dimensions, may vary depending on the requirements without departing from the scope of protection of the claims.

## Claims

1. Tire tread (2) comprising shoulder blocks (6, 10) and comprising at least one groove (26, 28, 30) and at least one rib (14,18, 22) providing an outer contact surface (100), further comprising a first radially outer layer (60) made of an outer tread rubber compound, further comprising a radially inner layer (66) made of an inner tread compound, wherein said inner layer (66) reaches radially through said at least one outer layer (60) to said contact surface (100) at least in one outer contact region (102) of said outer contact surface (100) in an unworn state of said tire tread (2) in such a way that said outer contact surface (100) comprises at least one region (102) of said outer layer (60) and at least one region of said inner layer (66),
**characterized in that**
a second outer layer (72) is provided which is arranged in said respective shoulder block (6, 10) and/or in said respective rib (14, 18, 22) and which is made of an outer tread rubber compound which is different from the outer tread rubber compound of said first outer layer (60), whereby the respective outer tread compound has Shore A between 55 and 75 degrees and/or has rebound at 23° C between 15 and 30 % and/or has rebound at 100° C between 45 and 65 % and/or has module 300% between 8 and 14 MPa and/or has tan delta at 60° C between 0.080 and 0.155.

2. Tire tread (2) according to claim 1, whereby said outer layer (72) is arranged in one or both respective shoulder blocks (6, 10) and forms a respectively shoulder zone (410, 420) which on one side is adjacent to said inner layer (66).

3. Tire tread (2) according to claim 1 or 2, wherein said inner tread compound is a rubber compound.

4. Tire tread (2) according to one of the claims 1 to 3, wherein said inner tread compound has Shore A between 55 and 75 degrees and/or has rebound at 23° between 30 and 45 % and/or has rebound at 100° between 50 and 75 % and/or has module 300% between 8 and 15 MPa and or has tan delta 60° C between 0.060 and 0.140.

5. Tire tread (2) according to one of the claims 1 to 4, further comprising a third layer (70) made of a third tread compound, whereby said third layer (70) is the radially inner most layer.

6. Tire tread (2) according to claim 5, whereby said third layer compound is a rubber compound.

7. Tire tread (2) according to claim 6, whereby said third tread compound has Shore A between 55 and 75 degrees and/or has rebound at 23° C between 15 and 30 % and/or has rebound at 100° C between 40 and 60 % and/or has module 300% between 8 and 12 MPa and or has tan delta 60° C between 0.040 and 0.100.

8. Tire Tread (2) according to one of the previous claims, comprising at least one outer edge part (300) made of an edge tread compound.

9. Pneumatic tire comprising a tire tread (2) according to one of the claims 1 to 8.

10. Pneumatic tire according to claim 9, whereby said tire comprises two sidewalls arranged, respectively, adjacent to said tire tread (2), and whereby said edge tread compound is essentially identical to the compound of which the respective sidewall is made.

## Patentansprüche

1. Reifenprofil (2) mit Schulterblöcken (6, 10) und mit mindestens einer Rille (26, 28, 30) und mindestens einer Rippe (14, 18, 22), die eine äußere Kontaktfläche (100) bilden, ferner umfassend eine erste radial äußere Schicht (60), die aus einer äußeren Laufflächen-Gummi-Zusammensetzung hergestellt ist, ferner umfassend eine radial innere Schicht (66), die aus einer inneren Laufflächen-Zusammensetzung hergestellt ist, wobei die innere Schicht (66) in einem unverschlissenen Zustand des Reifenprofils (2) radial durch die mindestens eine äußere Schicht (60) zu der Kontaktfläche (100) mindestens in einem äußeren Kontaktbereich (102) der äußeren Kontaktfläche (100) derart reicht, dass die äußere Kontaktfläche (100) mindestens einen Bereich (102) der äußeren Schicht (60) und mindestens einen Bereich der inneren Schicht (66) umfasst, **dadurch gekennzeichnet, dass** eine zweite äußere Schicht (72) vorgesehen ist, die in dem jeweiligen Schulterblock (6, 10) und/oder in der jeweiligen Rippe (14, 18, 22) angeordnet ist und die aus einer äußeren Laufflächen-Gummi-Zusammensetzung hergestellt ist, die sich von der äußeren Laufflächen-Gummi-Zusammensetzung der ersten äußeren Schicht (60) unterscheidet, wobei die jeweilige äußere Laufflächen-Zusammensetzung einen Shore A-Wert zwischen 55 und 75 Grad aufweist und/oder einen Rückprall bei 23° C zwischen 15 und 30 % aufweist und/oder einen Rückprall bei 100° C zwischen 45 und 65 % aufweist und/oder ein Modul von 300 % zwischen 8 und 14 MPa aufweist und/oder einen Tan Delta-Wert bei 60° C zwischen 0,080 and 0,155 aufweist.

2. Reifenprofil (2) nach Anspruch 1, wobei die Außenschicht (72) in einem oder beiden jeweiligen Schulterblöcken (6, 10) angeordnet ist und jeweils einen Schulterbereich (410, 420) bildet, der an einer Seite an die innere Schicht (66) angrenzt.

3. Reifenprofil (2) nach Anspruch 1 oder 2, wobei die innere Laufflächen-Zusammensetzung eine Gummi-Zusammensetzung ist.

4. Reifenprofil (2) nach einem der Ansprüche 1 bis 3, wobei die innere Laufflächen-Zusammensetzung eine Shore A-Wert zwischen 55 und 75 Grad und/oder einen Rückprall bei 23° zwischen 30 und 45 % und/oder einen Rückprall bei 100° zwischen 50 und 75 % und/oder ein Modul von 300 % zwischen 8 und 15 MPa und/oder einen Tan Delta-Wert bei 60° C zwischen 0,060 und 0,140 aufweist.

5. Reifenprofil (2) nach einem der Ansprüche 1 bis 4, ferner umfassend eine dritte Schicht (70), die aus einer dritten Laufflächen-Zusammensetzung hergestellt ist, wobei die dritte Schicht (70) die radial innerste Schicht ist.

6. Reifenprofil (2) nach Anspruch 5, wobei die genannte dritte Schicht eine Gummi-Zusammensetzung ist.

7. Reifenprofil (2) nach Anspruch 6, wobei die dritte Laufflächen-Zusammensetzung eine Shore A-Wert von 55 bis 75 Grad und/oder einen Rückprall bei 23° C von 15 bis 30 % und/oder einen Rückprall bei 100° C von 40 bis 60 % und/oder ein Modul von 300 % von 8 bis 12 MPa und/oder einen Tan Delta-Wert von 60° C von 0,040 bis 0,100 aufweist.

8. Reifenprofil (2) nach einem der vorhergehenden Ansprüche, mindestens umfassend einen äußeren Randteil (300), der aus einer Randlaufflächen-Zusammensetzung besteht.

9. Luftreifen mit einem Reifenprofil (2) nach einem der Ansprüche 1 bis 8.

10. Luftreifen nach Anspruch 9, wobei der Reifen zwei Seitenwände umfasst, die jeweils neben dem Reifenprofil (2) angeordnet sind, und wobei die Randlaufflächen-Zusammensetzung im Wesentlichen identisch mit der Zusammensetzung ist, aus der die jeweilige Seitenwand besteht.

## Revendications

1. Bande de roulement (2) comprenant des blocs d'épaulement (6, 10), au moins une rainure (26, 28, 30) et au moins une nervure (14,18, 22) fournissant une surface de contact extérieure (100), comprenant en outre une première couche radialement extérieure (60) constituée d'un composé de caoutchouc de bande de roulement extérieure, comprenant en outre une couche radialement intérieure (66) constituée d'un composé de bande de roulement intérieure, ladite couche intérieure (66) traversant radialement ladite au moins une couche extérieure (60) jusqu'à ladite surface de contact extérieure (100) au moins dans une région de contact extérieure (102) de ladite surface de contact extérieure (100) dans un état non usé de ladite bande de roulement (2) de telle manière que ladite surface de contact extérieure (100) comprenne au moins une région (102) de ladite couche extérieure (60) et au moins une région de ladite couche intérieure (66),
**caractérisée en ce**
**qu'**une deuxième couche extérieure (72) est prévue, laquelle deuxième couche extérieure est disposée dans ledit bloc d'épaulement (6, 10) respectif et/ou dans ladite nervure (14, 18, 22) respective et constituée d'un composé de caoutchouc de bande de roulement extérieure qui est différent du composé de caoutchouc de bande de roulement extérieure de ladite première couche extérieure (60), de sorte que le composé de bande de roulement extérieure respective présente une dureté Shore A comprise entre 55 et 75 degrés et/ou présente un rebond à 23 °C compris entre 15 et 30 % et/ou un rebond à 100 °C compris entre 45 et 65 % et/ou présente un module à 300 % compris entre 8 et 14 MPa et/ou présente une tangente delta à 60 °C comprise entre 0,080 et 0,155.

2. Bande de roulement (2) selon la revendication 1, dans laquelle ladite couche extérieure (72) est disposée dans un ou dans les deux blocs d'épaulement (6, 10) respectifs et forme respectivement une zone d'épaulement (410, 420) qui, d'un côté, est adjacente à ladite couche intérieure (66).

3. Bande de roulement (2) selon la revendication 1 ou 2, dans laquelle ledit composé de bande de roulement intérieure est un composé de caoutchouc.

4. Bande de roulement (2) selon l'une des revendications 1 à 3, dans laquelle ledit composé de bande de roulement intérieure présente une dureté Shore A comprise entre 55 et 75 degrés et/ou présente un rebond à 23° compris entre 30 et 45 % et/ou un rebond à 100° compris entre 50 et 75 % et/ou présente un module à 300 % compris entre 8 et 15 MPa et/ou présente une tangente delta à 60 °C comprise entre 0,060 et 0,140.

5. Bande de roulement (2) selon l'une des revendications 1 à 4, comprenant en outre une troisième couche (70) constituée d'un troisième composé de bande de roulement, ladite troisième couche (70) étant la couche la plus radialement intérieure.

6. Bande de roulement (2) selon la revendication 5, dans laquelle ledit troisième composé de couche est un composé de caoutchouc.

7. Bande de roulement (2) selon la revendication 6, dans laquelle ledit troisième composé de bande de roulement présente une dureté Shore A comprise entre 55 et 75 degrés et/ou présente un rebond à 23 °C compris entre 15 et 30 % et/ou un rebond à 100 °C compris entre 40 et 60 % et/ou présente un module à 300 % compris entre 8 et 12 MPa et/ou présente une tangente delta à 60 °C comprise entre 0,040 et 0,100.

8. Bande de roulement (2) selon l'une des revendications précédentes, comprenant au moins une partie de bord extérieure (300) constituée d'un composé de bande de roulement de bord.

9. Pneumatique comprenant une bande de roulement (2) selon l'une des revendications 1 à 8.

10. Pneumatique selon la revendication 9, ledit pneumatique comprenant deux parois latérales disposées, respectivement, de manière adjacente à ladite bande de roulement (2), et dans lequel ledit composé de bande de roulement de bord est essentiellement identique au composé dont est constituée la paroi latérale respective.
